# EUROPÄISCHE PATENTANMELDUNG

(11) **EP 1 925 504 A2**
(43) Veröffentlichungstag der Anmeldung: **28.05.2008**
(21) Anmeldenummer: 06025066.9
(22) Anmeldetag: 05.12.2006
(51) Int. Cl.: B60R 13/08

(54) **Schallabsorbierendes Hitzeschild**

(30) Priorität: 21.11.2006 DE 202006017814 U
(71) Anmelder: Lydall Gerhardi GmbH & Co.KG, 58540 Meinerzhagen (DE)
(72) Erfinder: Slimko, Gregory, 44500 La Baule (FR); Forgeard, Julien, 44380 Pornichet (FR)
(74) Vertreter: Kötter, Ulrich

(57) **Zusammenfassung**

Schallabsorbierendes Hitzeschild, umfassend wenigstens zwei Schichten (1, 3) zwischen denen ein Luftspalt (2) angeordnet ist, wobei eine erste, äußere Schicht (1) perforiert ausgeführt ist und eine weitere Schicht (3) eine Multilayer-Folie ist, die aus wenigstens drei Schichten (31, 32, 33, 34, 35) gebildet ist.

## Beschreibung

Die Erfindung betrifft ein schallabsorbierendes Hitzeschild nach dem Patentanspruch 1.

Derartige Hitzeschilde finden insbesondere in der Automobilindustrie Verwendung, um beispielsweise das Tunnelinnere im Bodenteil eines Fahrzeugs zu verkleiden. Derartigen Verkleidungen kommt eine große Bedeutung zu, da einerseits bei der üblichen Verwendung von Katalysatoren die Temperatur der Abgase und damit auch die Temperatur der Auspuffrohre stark erhöht ist und andererseits die Grenzwerte für den Geräuschpegel eines Fahrzeugs zunehmend tiefer anzusetzen sind.

Derzeit bekannte schallabsorbierende Hitzeschilde lassen sich in zwei Kategorien einteilen: Derzeitige "Multilayerabsorber" sind aus mehreren hintereinander angeordneten Folien gebildet, zwischen denen schmale Luftspalte angeordnet sind. Diese Absorber haben auf Grund ihrer geringen Dicke nur eine geringe schallabsorbierende Wirkung. Weiterhin ist bekannt, dass Multilayerschilde den Schall nur im relativ hohen Frequenzbereich absorbieren.

Sogenannte "Tuned Resonant Absorber" bestehen im Wesentlichen aus einem perforierten Trägerblech, hinter dem eine Schicht, bestehend aus porösem Medium angeordnet ist. Zwischen dem Trägerblech und dem porösen Medium ist ein Luftspalt angeordnet. Tuned Resonant Absorber können Schall nur innerhalb eines schmalen Frequenzbandes absorbieren. Durch Veränderung der Dicke des Luftspaltes oder der Geometrie des perforierten Bleches kann das Frequenzband höher oder niedriger positioniert werden. Ein schmalerer Luftspalt bei konstanter Geometrie des perforierten Halteblechs bewirkt ein höher angesiedeltes Frequenzband; eine Erhöhung der Dicke des Luftspalts bewirkt den gegenteiligen Effekt. Weiterhin kann die Lage des Frequenzbandes durch Veränderung der Perforationsdichte und / oder der Dicke des Haltebleches variiert werden.

Nachteilig an den vorbekannten Hitzeschilden ist, dass diese nur innerhalb eines relativ schmalen Frequenzbandes schallabsorbierend wirken. Darüber hinaus weisen die vorbekannten Systeme eine erhebliche Bauhöhe auf.

Hier will die Erfindung Abhilfe schaffen. Der Erfindung liegt die Aufgabe zu Grunde, ein schallabsorbierendes Hitzeschild zu schaffen, bei dem die Bandbreite absorbierter Frequenzen erhöht ist und dass darüber hinaus eine kompakte Bauweise aufweist. Gemäß der Erfindung wird diese Aufgabe durch die Merkmale des Patentanspruchs 1 gelöst.

Mit der Erfindung ist ein schallabsorbierendes Hitzeschild geschaffen, bei dem die Bandbreite absorbierter Frequenzen erhöht ist und dass darüber hinaus eine kompakte Bauweise aufweist. Die Kombination des perforierten Tuned Resonant Absorbers mit einer Multilayer-Folien-Anordnung bewirkt den Vorteil einer einzelnen diskreten Resonanzfrequenz, welche durch niedrigere und höhere Absorbierungspeaks flankiert ist. Die Kombination dieser drei Peaks bewirkt die Schallabsorbierung in einem breiteren Frequenzband. Diese Breitbandabsorbtion zeichnet sich nicht nur durch eine signifikante Wirkung im akustischen Bereich aus, sondern auch in der Kompaktheit des Schildes. Durch die Kombination der Ansätze eines Tuned Resonant Absorbers mit dem eines Multilayerabsorbers wird der für eine Absorbtion im mittleren Frequenzbereich erforderliche Platzbedarf erheblich vermindert. Dieses bietet eine attraktive Alternative zu traditionellen Absorbern, welche eine zwei bis fünfmal so große Dicke aufweisen.

Durch die Hinzufügung einer Multilayer-Folie an der dem perforierten Halteblech eines Tuned Resonant Absorbers gegenüberliegenden Seite des Luftspaltes wird eine Veränderung der Absorbtionscharakteristik bewirkt. Die erforderliche Dicke des Luftspalts wird verringert bei gleichzeitiger Erhöhung der Resonanzfrequenz des Tuned Resonant Absorbers. Diese Erhöhung der Resonanzfrequenz ist begleitet von einem niedrigerem sowie einem höheren Frequenzabsorbtionspeak. Diese beiden Peaks sind das Ergebnis der Hinzufügung multipler Folienlayer an der dem Luftspalt gegenüberliegenden Seite.

In Weiterbildung der Erfindung sind die Folien Metallfolien. Hierdurch ist zum Einen ein guter Hitzeabschirmgrad bewirkt; zum Anderen ist die Recyclingfähigkeit des Hitzeschildes erhöht.

ln Ausgestaltung der Erfindung ist die Multilayer-Folie aus einer ungeraden Anzahl Lagen gebildet, wobei jeweils zwischen zwei Lagen mit geschlossenen Oberflächen eine Lage aus Streckmetallgitter angeordnet ist. Hierdurch ist eine gute Schallisolationswirkung erzielt.

ln Weiterbildung der Erfindung sind die Lagen mit geschlossener Oberfläche Aluminiumflächen. Hierdurch ist eine hohe Wärmeleitfähigkeit, verbunden mit einem geringen Gewicht des Hitzeschildes bewirkt. Bevorzugt sind in die erste Schicht Erhebungen eingeprägt.

In weiterer Ausgestaltung der Erfindung sind die Schichten umlaufend miteinander verbunden. Hierdurch ist eine konstante Dicke des Luftspaltes bewirkt. Darüber hinaus ist die Stabilität des Hitzeschildes erhöht.

Bevorzugt ist die Perforation der ersten Schicht durch in regelmäßigen Abständen zueinander beabstandet eingebrachte Öffnungen gebildet. Hierdurch ist ein gutes Schallabsorbtionsverhalten bewirkt. Es wurde herausgefunden, dass bei konstanter Materialdicke sowie konstanter Öffnungsgröße der Perforationen durch Variation des Abstandes zwischen den Öffnungen die Resonanzfrequenz des Tuned Resonant Absorbers verändert werden kann. Eine Verkleinerung des Abstandes zwischen den Öffnungen bewirkt eine Erhöhung der Resonanzfrequenz; eine Verminderung des Abstandes bewirkt den gegenteiligen Effekt. Bevorzugt sind die Öffnungen kreisrund ausgeführt.

In weiterer Ausgestaltung der Erfindung weist der Luftspalt eine Höhe von wenigstens 3,0 Millimeter auf. Hierdurch ist ein gutes Schallabsorbtionsverhalten bei gleichzeitiger hoher Hitzeschutzwirkung erzielt.

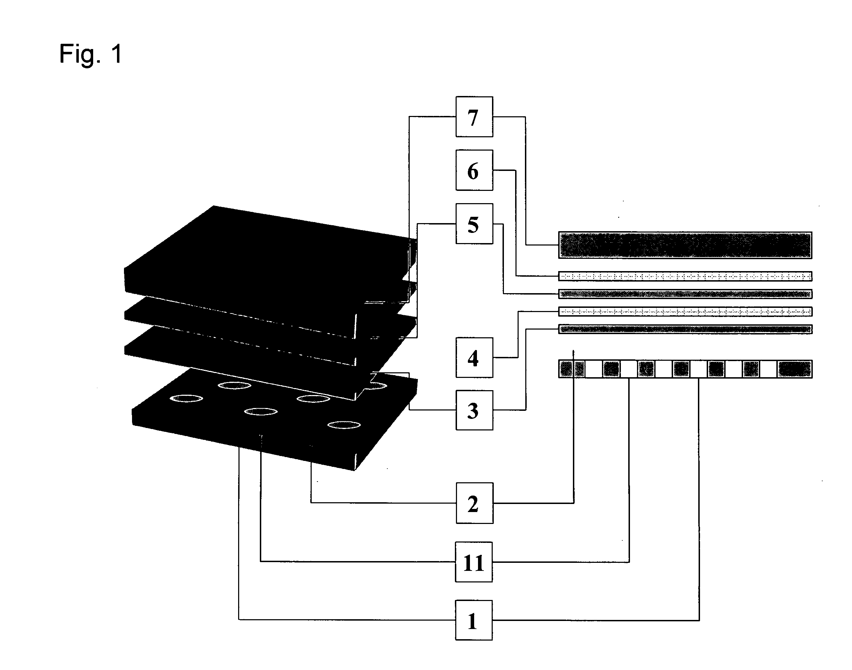

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Die einzige Figur 1 zeigt den schematischen Aufbau eines schallabsorbierenden Hitzeschildes.

Das als Ausführungsbeispiel gewählte Hitzeschild besteht im Wesentlichen aus einem Trägerblech 1, hinter dem beabstandet zu diesem eine Multilayer-Folie 3 angeordnet ist, wodurch ein Luftspalt 2 gebildet ist.

Das Trägerblech 1 ist mikroperforiert ausgeführt. Die Ausführung der Perforation ist so gewählt, dass die Funktion hinsichtlich der gewünschten Frequenz unter Berücksichtigung des erforderlichen Platzbedarfes und der möglichen Dicke des Luftspaltes gewährleistet ist. Im Ausführungsbeispiel ist das Trägerblech 1 aus 0,5 Millimeter geprägtem 1050-O-Aluminiumblech gebildet. Die Höhe der Einprägungen beträgt 2,25 Millimeter. lm Ausführungsbeispiel ist das Trägerblech 1 mit kreisrunden Öffnungen 11 perforiert, deren Durchmesser 1,0 Millimeter betragen. Der Abstand zwischen den Mittelpunkten der Öffnungen beträgt 11,4 Millimeter. Die Öffnungen 11 der Perforation umfassen bevorzugt zwischen 0,5 % und 6% der Gesamtfläche des Trägerblechs 1. Der Luftspalt 2, also der Abstand zwischen dem Trägerblech 1 und der ersten Schicht 31 der Multilayer-Folie 3, beträgt im Ausführungsbeispiel 4,0 Millimeter. Es wurde festgestellt, dass gute Ergebnisse bei einer Luftspaltdicke von 3,0 bis 30,0 Millimeter erzielt werden.

Die Multilayer-Folie 3 besteht im Ausführungsbeispiel aus fünf Schichten 31, 32, 33, 34, 35. Die erste dem Trägerblech 1 zugewandte Folie 31 ist eine 1050-O-Aluminiumfolie der Stärke 0,02 Millimeter. Die Materialstärke sollte bevorzugt weniger als 300 Mikrometer betragen.

Die nachfolgende Schicht 32 ist aus Streckmetall gebildet. Die Dicke des Materials der Schicht 32 beträgt 0,05 Millimeter. Die Materialstärke sollte bevorzugt weniger als 100 Mikrometer betragen.

Die nachfolgende dritte Schicht 33 ist wiederum eine 0,02 Millimeter starke 1050-O-Aluminiumfolie. Die Materialstärke sollte bevorzugt weniger als 300 Mikrometer betragen.

Die nachfolgende vierte Schicht 34 ist wiederum aus einem Streckmetallgitter gebildet, dessen Materialdicke 0,05 Millimeter beträgt. Die Materialstärke sollte bevorzugt weniger als 100 Mikrometer betragen.

Die sich anschließende fünfte und letzte Schicht 35, im Allgemeinen als Deckfolie bezeichnet, ist eine 1050-O-Aluminiumfolie der Stärke 0,10 Millimeter. Die Dicke der Deckfolie 35 hat keinen Einfluss auf das Schallabsorbtionsverhalten des Hitzeschildes.

lm Ausführungsbeispiel sind alle Folienschichten 31, 33, 35 eben ausgeführt, sie können alternativ auch gewölbt bzw. mit Prägungen versehen ausgeführt sein. Die aus Streckmetallgitter gebildeten Zwischenschichten 32, 34 sind leicht gewölbt. Die Außenseiten des Trägerblechs 1 sowie der Multilayer-Folie 3 stehen miteinander in Kontakt, so dass diese durch weitere mechanische Bauteile eingefasst, gestapelt oder miteinander fixiert werden können. Die Gesamtdicke der so gebildeten Multilayer-Folie 3 beträgt 2,0 Millimeter. Die Gesamtdicke des so gebildeten schallabsorbierenden Hitzeschildes beträgt im Ausführungsbeispiel 8,25 Millimeter.

Je nach Einsatzfeld des Hitzeschildes ist das Trägerblech 1 entsprechend der Außenkontur der abzuschirmenden Oberfläche geformt und zugeschnitten. Gleichzeitig ist die Multilayer-Folie geformt und zugeschnitten. Die Form der Multilayer-Folie weicht dabei von der Form des Trägerblechs ab. Die Differenz zwischen den Geometrien bestimmt die Dicke des Luftspalts 2.

## Patentansprüche

1. Schallabsorbierendes Hitzeschild, umfassend wenigstens zwei Schichten (1, 3) zwischen denen ein Luftspalt (2) angeordnet ist, wobei eine erste, äußere Schicht (1) perforiert ausgeführt ist und eine weitere Schicht (3) eine Multilayer-Folie ist, die aus wenigstens drei Schichten (31, 32, 33, 34, 35) gebildet ist.

2. Schallabsorbierendes Hitzeschild nach Anspruch 1, **dadurch gekennzeichnet, dass** die Schichten (31, 32, 33, 34, 35) Metallfolien sind.

3. Schallabsorbierendes Hitzeschild nach Anspruch 1 oder 2, **dadurch gekennzeichnet, dass** die Multilayer-Folie (3) aus einer ungeraden Anzahl Schichten (31, 32, 33, 34, 35) gebildet ist, wobei jeweils zwischen zwei Schichten (31, 33, 35) mit geschlossenen Oberflächen eine Schicht 32, 34 aus Streckmetallgitter angeordnet ist.

4. Schallabsorbierendes Hitzeschild nach Anspruch 3, **dadurch gekennzeichnet, dass** die Schichten (31, 33, 35) mit geschlossener Oberfläche Aluminiumfolien sind.

5. Schallabsorbierendes Hitzeschild nach einem der vorgenannten Ansprüche, **dadurch gekennzeichnet, dass** die erste Schicht (1) aus Aluminium hergestellt ist.

6. Schallabsorbierendes Hitzeschild nach einem der vorgenannten Ansprüche, **dadurch gekennzeichnet, dass** in die erste Schicht (1) Erhebungen eingeprägt sind.

7. Schallabsorbierendes Hitzeschild nach einem der vorgenannten Ansprüche, **dadurch gekennzeichnet, dass** die Schichten (1, 31, 32, 33, 34, 35) umlaufend miteinander verbunden sind.

8. Schallabsorbierendes Hitzeschild nach einem der vorgenannten Ansprüche, **dadurch gekennzeichnet, dass** die Perforation der ersten Schicht (1) durch in regelmäßigen Abständen zueinander beabstandet eingebrachten Öffnungen (11) gebildet ist.

9. Schallabsorbierendes Hitzeschild nach Anspruch 8, **dadurch gekennzeichnet, dass** die Öffnungen (11) kreisrund ausgeführt sind.

10. Schallabsorbierendes Hitzeschild nach einem der vorgenannten Ansprüche, **dadurch gekennzeichnet, dass** der Luftspalt (2) eine Höhe von wenigstens 3,0 Millimeter aufweist.
